# EUROPÄISCHE PATENTANMELDUNG

(11) **EP 1 378 985 A2**
(43) Veröffentlichungstag der Anmeldung: **07.01.2004**
(21) Anmeldenummer: 03008670.6
(22) Anmeldetag: 16.04.2003
(51) Int. Cl.: H02K 17/16

(54) **Asynchronmaschine**

(30) Priorität: 04.07.2002 DE 10230006
(71) Anmelder: ROBERT BOSCH GMBH, 70442 Stuttgart (DE)
(72) Erfinder: Vlemmings, Johannes, 71263 Weil Der Stadt (DE); Roth, Karl-Juergen, 71701 Schwieberdingen (DE)

(57) **Zusammenfassung**

Die Erfindung betrifft eine Asynchronmaschine (10), insbesondere für einen Starter-Generator einer Verbrennungskraftmaschine, mit einem Stator und mit einem Rotor (22), der eine Rotorwelle (24), ein Blechpaket (28) und ein drehfest mit der Rotorwelle (24) und dem Blechpaket (28) verbundenen Kurzschlusskäfig (30) umfasst, wobei der Kurzschlusskäfig (30) an seinen entgegengesetzten Stirnenden jeweils einen Kurzschlussring (36) aufweist, der mit einem ringförmigen Armierungselement (40, 42) gesichert ist. Es ist vorgesehen, dass die Armierungselemente (40, 42) benachbarte äußere Umfangsflächen des Kurzschlusskäfigs (32) bzw. der Kurzschlussringe (36) nicht übergreifen.

## Beschreibung

Die Erfindung betrifft eine Asynchronmaschine mit den im Oberbegriff des Anspruchs 1 genannten Merkmalen.

### Stand der Technik

Asynchronmaschinen der gattungsgemäßen Art sind für viele Anwendungen interessant, wie zum Beispiel Werkzeugmaschinen, Elektrowerkzeuge oder auf dem Kraftfahrzeugsektor für Hybridantriebe, elektrisch angetriebene Turbolader oder Starter-Generatoren für Verbrennungskraftmaschinen, die teilweise für sehr hohe maximale Drehzahlen ausgelegt werden müssen.

Wenn als Starter-Generator eine Asynchronmaschine mit einem Kurzschlussläufer eingesetzt wird, bei welcher der Kurzschlusskäfig des Rotors einstückig aus Aluminium-Druckguss hergestellt ist, werden die an Leistung und Wirkungsgrad gestellten Anforderungen häufig nicht erfüllt, weshalb als Käfigmaterial nicht selten Reinkupfer zum Einsatz kommt. Diese aus Reinkupfer hergestellten Kurzschlusskäfige bestehen gewöhnlich aus kaltverformten Kupferstäben, die in Aufnahmenuten des Blechpakets des Rotors eingeschoben und an ihren Stirnenden jeweils mit einem der beiden Kurzschlussringe hartverlötet werden, welche gewöhnlich entweder aus Kupfer gegossen oder aus mehreren gestanzten Kupferblechen aufgeschichtet werden. Infolge des Verlötens der Kurzschlussstäbe mit den Kurzschlussringen werden jedoch die Festigkeitseigenschaften des verwendeten Kupfermaterials im Bereich der Lötstellen und um diese herum drastisch verschlechtert. Dies kann dazu führen, dass bei hohen Drehzahlen die Streckgrenze des Materials überschritten wird, was eine plastische Verformung zur Folge hat. Diese zeigt sich bei bekannten Schadensbildern in Form von Auswölbungen, die am Innendurchmesser der Kurzschlussringe beginnen und im Extremfall zum Aufreißen des Kurzschlussrings und zu einer Zerstörung der Asynchronmaschine führen können.

Um die Rotoren ausreichend drehzahlfest zu machen, werden daher Zusatzmaßnahmen ergriffen, wie zum Beispiel die Montage sogenannter Armierungsringe aus einem Material mit höherer Zugfestigkeit, die den benachbarten Kurzschlussring an seiner vom Blechpaket abgewandten Stirnseite und an seiner dem Luftspalt zugewandten äußeren Umfangsfläche umgreifen, so dass sie den Kurzschlussring nach außen hin abstützen und einen Teil der bei hohen Drehzahlen auf den Kurzschlussring einwirkenden Zentrifugalkräfte aufnehmen. Die DE 199 55 050 A1 der Anmelderin offenbart einen solchen Armierungsring, der mit Schrauben am Blechpaket befestigt ist und eine umlaufende, in axialer Richtung einseitig offenen Nut aufweist, die das über die benachbarte Stirnfläche des Blechpakets überstehende Stirnende des Kurzschlusskäfigs mit dem Kurzschlussring aufnimmt. Wenn ein solcher Armierungsring aus Stahlblech hergestellt wird, das magnetische Eigenschaften aufweist, führt dies zu einem guten magnetischen Rückschluss für das Streufeld am Stirnende des Rotors, was eine unzulässige Vergrößerung der Rotorstreuung und damit verbundene Leistungseinbußen der Asynchronmaschine zur Folge hat. Grundsätzlich könnte dieser Nachteil vermieden werden, wenn bei der Herstellung eines solchen Armierungsrings eine unmagnetische Stahlsorte verwendet wird, jedoch führt dies zu deutlich höheren Materialkosten und erschwert zudem die mechanischen Bearbeitung des Armierungsrings.

### Vorteile der Erfindung

Die erfindungsgemäße Asynchronmaschine mit den im Anspruch 1 genannten Merkmalen bietet demgegenüber den Vorteil, dass mit der zum Luftspalt hin offenen Konstruktion der beiden Armierungselemente ein magnetischer Rückschluss für die Streufelder an den Stirnenden des Rotors vermieden werden kann, so dass die Armierungselemente aus preiswerterem und leichter zu bearbeitendem magnetischem Stahl hergestellt werden können, dass jedoch trotzdem ein ausreichender Schutz gegen eine fliehkraftbedingte Verformung der Kurzschlussringe gewährleistet werden kann. Festigkeitsrechnungen haben überraschenderweise ergeben, dass die höchsten Materialbeanspruchungen am Innendurchmesser der Kurzschlussringe auftreten, was zu den beobachteten Schadensbildern mit einer am Innendurchmesser beginnenden Auswölbung der Kurzschlussringe passt. Um an dieser Stelle der höchsten Materialbeanspruchungen eine plastische Verformung der Kurzschlussringe zu verhindern, reicht es nach den Berechnungen der Erfinder jedoch aus, die Armierungselemente nur im Bereich der ebenen Stirnflächen der Kurzschlussringe anzubringen und für eine rein axiale Abstützung der Kurzschlussringe zu sorgen.

In bevorzugter Ausgestaltung der Erfindung ist vorgesehen, dass die Armierungselemente an ihrem äußeren Umfang mit benachbarten äußeren Umfangsflächen der Kurzschlussringe fluchten, während sie an ihrem inneren Umfang über benachbarte innere Umfangsflächen der Kurzschlussring überstehen können, so dass die gesamte Stirnfläche der Kurzschlussringe und insbesondere der Bereich der höchsten Materialbeanspruchungen durch das jeweilige Armierungselement abgestützt wird, ohne dass das Einschieben des Rotors ins Gehäuse durch den äußeren Umfang des vorderen Armierungsrings behindert wird..

Gemäß einer weiteren bevorzugten Ausgestaltung der Erfindung werden die Kurzschlussringe bzw. der Kurzschlusskäfig zwischen den Armierungselementen verspannt, indem mindestens eines der Armierungselemente in axialer Richtung gegen den benachbarten Kurzschlussring angepresst wird, so dass es auch bei hohen Drehzahlen nicht weggedrückt werden kann, falls im Bereich der Lötstellen die Fließgrenze des Kupfers im Kurzschlussring überschritten werden sollte.

Dieser axiale Andruck des Armierungselements kann zum Beispiel dadurch sichergestellt werden, dass das Armierungselement zwischen den Kurzschlussstäben des Kurzschlusskäfigs mit dem Blechpaket des Rotors verschraubt, vernietet, verschweißt, auf die Rotorwelle aufgeschrumpft oder aufgepresst oder auf andere Weise starr mit dem Rotorblechpaket verbunden wird, was darüber hinaus ein Auswuchten des Rotors durch selektiven Materialabtrag an den Armierungselementen ermöglicht, da diese durch die starre Verbindung drehfest mit dem Blechpaket gekoppelt sind.

Vorteilhafterweise dienen die beiden Armierungselemente darüber hinaus auch zur axialen Fixierung des Blechpakets und des Kurzschlusskäfigs auf der Rotorwelle, wobei sich von den gegen die Stirnseiten des Kurzschlussrings anliegenden Armierungselementen nach dem Aufschieben des Blechpakets und des Kurzschlusskäfigs auf die Rotorwelle bevorzugt das vordere gegen eine Ringschulter der Rotorwelle abstützt, während das hintere auf die Rotorwelle aufgeschrumpft oder aufgepresst wird.

Um die Fertigung der Armierungselemente zu erleichtern und die Materialkosten so weit wie möglich zu verringern, bestehen die Armierungselemente vorzugsweise aus handelsüblichem magnetischem Stahl, dessen Zug- und Biegefestigkeit diejenige des Kupfers ausreichend weit übersteigt.

### Zeichnungen

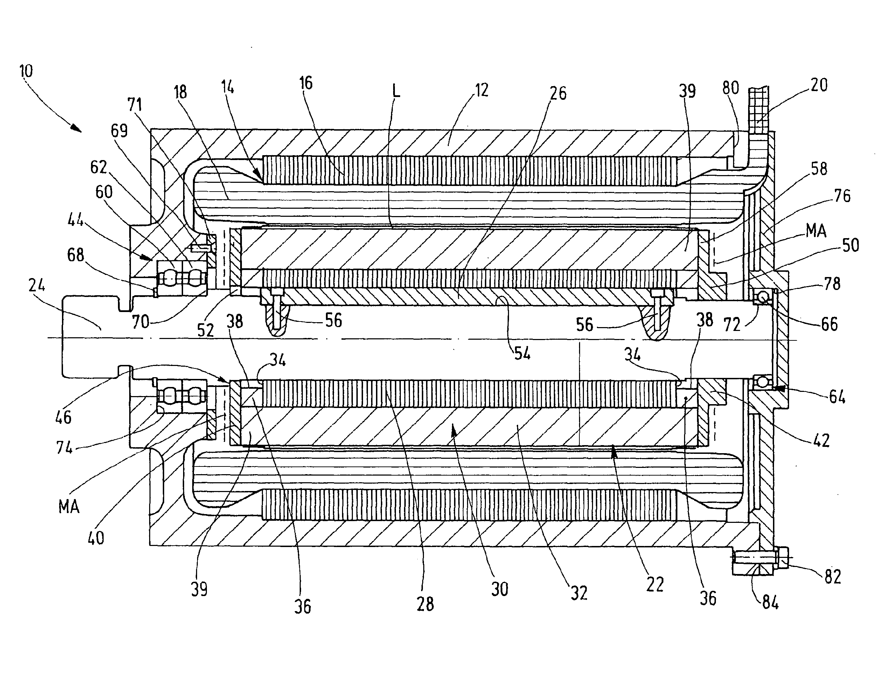

Die Erfindung wird nachfolgend in einem Ausführungsbeispiel anhand der zugehörigen Zeichnung näher erläutert, deren einzige Figur eine Längsschnittansicht einer Asynchronmaschine zeigt.

### Beschreibung des Ausführungsbeispiels

Die in der Zeichnung dargestellte, als Kurzschlussoder Käfigläufermotor ausgebildete Asynchronmaschine 10 besteht im Wesentlichen aus einem ortsfesten Gehäuse 12, einem im Gehäuse 12 angeordneten Ständer oder Stator 14 mit einem Stator- oder Ständerblechpaket 16 und einer Stator- oder Ständerwicklung 18, der über ein Anschlusskabel 20 dreiphasiger Drehstrom zugeführt wird. Im Gehäuse 12 ist ein Anker oder Rotor 22 drehbar gelagert, der im Wesentlichen aus einer über ein vorderes Gehäusestirnende überstehenden Rotorwelle 24, einem mittels einer Passfeder 26 drehfest mit der Rotorwelle 24 verbundenen Blechpaket 28 sowie einem die Ankerwicklung bildenden Kurzschlusskäfig 30 besteht. Der Stator 14 und der Rotor 22 sind durch einen Luftspalt L getrennt.

Der Kurzschlusskäfig 30 des Rotors 22 besteht aus einer Mehrzahl von Kurzschlussstäben 32, die axial ausgerichtete Nuten (nicht sichtbar) des Ankerblechpakets 28 durchsetzen und an ihren entgegengesetzten, über die Stirnflächen 34 des Blechpakets 28 überstehenden Stirnenden starr mit jeweils einem Kurzschlussring 36 verbunden sind. Die Kurzschlussstäbe 32 bestehen aus kaltverformtem Kupfer und werden mit ihren Stirnenden in axiale Ausnehmungen der aus Kupfer gegossenen oder aus gestanzten Kupferblechen aufgeschichteten Kurzschlussringe 36 eingesetzt, bevor sie durch Hartlöten mit diesen verbunden werden. Die beiden Kurzschlussringe 36 liegen gegen die benachbarten Stirnflächen 34 des Blechpakets 28 an und sind mit ihren inneren Umfangsflächen 38 im radialen Abstand von der benachbarten Umfangsfläche der Rotorwelle 24 angeordnet.

Da sich die Festigkeitseigenschaften des Kupfermaterials der Kurzschlussstäbe 32 und der Kurzschlussringe 36 infolge des Lötens im Bereich der Lötstellen 39 drastisch verschlechtern, ist der Rotor 22 mit zwei Armierungselementen in Form von Anpressscheiben 40, 42 versehen, die von entgegengesetzten Seiten her gegen die voneinander abgewandten ebenen Stirnflächen der beiden Kurzschlussringe 36 angepresst werden. Die beiden Anpressscheiben 40, 42 werden jeweils in axialer Richtung von ebenen Stirnflächen begrenzt, während sie in radialer Richtung durch eine gegen die Rotorwelle 24 anliegende innere zylindrische Umfangsfläche bzw. eine mit den äußeren Umfangsflächen der Kurzschlussringe 36 und des Blechpakets 28 fluchtende äußere zylindrische Umfangsfläche begrenzt werden.

Die beiden Anpressscheiben 40, 42 stehen radial nach innen etwas über die innere Umfangsfläche des benachbarten Kurzschlussrings 36 über und sind aus einem gewöhnlichen unlegierten magnetischen Stahl gefertigt. Da sie die beiden Kurzschlussringe 36 in radialer Richtung nach außen zu nicht übergreifen, kann trotz der Verwendung eines derartigen Materials ein magnetischer Rückschluss für das Streufeld am Stirnende des Rotors 22 vermieden und somit eine Vergrößerung der Rotorstreuung und damit verbundene Leistungseinbußen der Asynchronmaschine 10 verhindert werden.

Während die zu einem vorderen Gehäuseende benachbarte vordere Anpressscheibe 40 mit Spiel auf die Rotorwelle 24 aufgeschoben wird, bis sie sich in der Nähe eines als Festlager ausgebildeten vorderen Drehlagers 44 der Rotorwelle 24 gegen eine nach hinten zum Blechpaket 28 weisende Ringschulter 46 der Rotorwelle 24 abstützt, wird die hintere Anpressscheibe 42 drehfest und axial unverschiebbar auf der Rotorwelle 24 montiert, wobei sie das Blechpaket 28 mit einer vorgeschriebenen Anpresskraft in Richtung der vorderen Anpressscheibe 40 drückt, so dass es zwischen den beiden Anpressscheiben 40, 42 verspannt ist. Die Montage der hinteren Anpressscheibe 42 kann durch Aufpressen oder Aufschrumpfen auf die Rotorwelle erfolgen, wobei im zuletzt genannten Fall die Anpressscheibe 42 zweckmäßig nach dem Abkühlen noch mit einer vorgeschriebenen Presskraft axial in Richtung der Anpressscheibe 40 nachgepresst wird, um für eine ausreichende Verspannung des Blechpakets 28 zu sorgen. Durch die spielfreie Anlage der beiden Anpressscheiben 40, 42 gegen die jeweils benachbarte Stirnfläche des Kurzschlusskäfigs 30 wird das Blechpaket 28 mit dem Kurzschlusskäfig 30 zudem in axialer Richtung unverschiebbar in Bezug zur Passfeder 26 fixiert.

Um einen festen Sitz der hinteren Anpressscheibe 42 zu gewährleisten, weist diese zur Vergrößerung der Anlagefläche zwischen ihrer inneren Umfangsfläche und der Umfangsfläche der Rotorwelle 24 auf ihrer hinteren Stirnseite einen axial überstehenden ringförmigen Vorsprung 50 mit kleinerem Außendurchmesser auf.

Die vordere und die hintere Anpressscheibe 40, 42 können mit dem Blechpaket 28 verschraubt, vernietet oder verschweißt werden, so dass sie sich bei der Montage zusammen mit dem Blechpaket 28 und dem Kurzschlusskäfig 30 auf der Rotorwelle 24 montieren lassen. In diesem Fall wird die vordere Anpressscheibe 40 an ihrem inneren Umfang an einer Stelle mit einer Ausnehmung 52 versehen, so dass sie sich über die Passfeder 26 schieben lässt, die vor der Montage des Blechpakets 28 und des Kurzschlusskäfigs 30 in eine axiale Nut 54 der Rotorwelle 24 eingesetzt und vorne und hinten mit je einer Schraube 56 befestigt wird.

Außerdem hat eine starre, drehfeste Verbindung zwischen den Anpressscheiben 40, 42 einerseits und dem Blechpaket 28 mit dem Kurzschlusskäfig 30 andererseits den Vorteil, dass der Rotor 22 vor dem Einsetzen in das Gehäuse 12 durch selektiven Materialabtrag MA an den voneinander abgewandten Stirnseiten der Anpressscheiben 40, 42 ausgewuchtet werden kann, wie in unterbrochenen Linien dargestellt. Bei der hinteren Anpressscheibe 42 erfolgt der Materialabtrag zweckmäßig an einem in radialer Richtung nach außen über den ringförmigen Vorsprung 50 überstehenden Teil 58 der Anpressscheibe 42.

Das vordere Drehlager 44 für den Rotor 22 wird von einem aus zwei Wälzlagern 60, 62 bestehenden Lagersatz in der Nähe des vorderen Endes der Rotorwelle 24 gebildet, während ein als Loslager ausgebildetes hinteres Drehlager 64 von einem einzelnen Wälzlager 66 am hinteren Ende der Rotorwelle 24 gebildet wird. Die beiden von vorne her auf die Rotorwelle 24 aufgeschobenen Wälzlager 60, 62 werden durch einen Sicherungsring 68 gegen eine Ringschulter 70 der Rotorwelle 24 anliegend auf der Rotorwelle 24 gesichert. Ein mit Befestigungsschrauben 69 von innen her mit dem Gehäuse 12 verschraubter Haltering 71 dient als rückwärtige Fixierung des Festlagers 60, 62. Das Wälzlager 66 wird nach der Montage des Blechpakets 28 mit dem Kurschlusskäfig 30 von hinten her bis zur Anlage gegen eine Ringschulter 72 der Rotorwelle 24 auf deren hinteres Ende aufgepresst.

Nach dem Auswuchten des Rotors 22 wird dieser zusammen mit den vorderen Wälzlagern 60, 62 und dem hinteren Wälzlager 66 in das Gehäuse 12 eingeführt, bis der Außenring des vordersten Wälzlagers gegen eine Ringschulter 74 des Gehäuses 12 anliegt. Anschließend wird das offene hintere Ende des Gehäuses 12 durch einen Lagerdeckel 76 verschlossen, der auf seiner Innenseite mit einem zylindrischen Sitz 78 für das Wälzlager 66 versehen ist. Zum Ausgleich einer unterschiedlichen Wärmedehnung des Gehäuses 12 und der Rotorwelle 24 ist zwischen dem Außenring des hinteren Wälzlagers 66 und dem Lagerdeckel 76 innerhalb des Sitzes 78 ein Wellenfederring (nicht dargestellt) vorgesehen. Nach dem Herausführen des Anschlusskabels 20 durch eine seitliche Öffnung 80 zwischen dem Gehäuse 12 und dem Lagerdeckel 76 wird der letztere mit mehreren Befestigungsschrauben 82 an einem benachbarten überstehenden Ringflansch 84 des Gehäuses 12 festgeschraubt.

## Patentansprüche

1. Asynchronmaschine, insbesondere für einen Starter-Generator einer Verbrennungskraftmaschine, mit einem Stator und mit einem Rotor, der eine Rotorwelle, ein Blechpaket und ein drehfest mit der Rotorwelle und dem Blechpaket verbundenen Kurzschlusskäfig umfasst, wobei der Kurzschlusskäfig an seinen entgegengesetzten Stirnenden jeweils einen Kurzschlussring aufweist, der mit einem ringförmigen Armierungselement gesichert ist, **dadurch gekennzeichnet, dass** die Armierungselemente (40, 42) benachbarte äußere Umfangsflächen des Kurzschlusskäfigs (32) bzw. der Kurzschlussringe (36) nicht übergreifen.

2. Asynchronmaschine nach Anspruch 1, **dadurch gekennzeichnet, dass** äußere Umfangsflächen der Armierungselemente (40, 42) und benachbarte äußere Umfangsflächen des Kurzschlusskäfigs (32) bzw. des Kurzschlussrings (36) miteinander fluchten.

3. Asynchronmaschine nach einem der vorhergehenden Ansprüche, **dadurch gekennzeichnet, dass** die aus Kupfer bestehenden Kurzschlussringe (36) durch Löten mit Kurzschlussstäben (32) aus Kupfer zum Kurzschlusskäfig (30) verbunden sind.

4. Asynchronmaschine nach einem der vorhergehenden Ansprüche, **dadurch gekennzeichnet, dass** mindestens eines der Armierungselemente (40, 42) in axialer Richtung gegen den benachbarten Kurzschlussring (36) angepresst wird.

5. Asynchronmaschine nach einem der vorhergehenden Ansprüche, **dadurch gekennzeichnet, dass** das Blechpaket (28) mit dem Kurzschlusskäfig (32) bzw. den Kurzschlussringen (36) zwischen den Armierungselementen (40, 42) verspannt ist.

6. Asynchronmaschine nach einem der vorhergehenden Ansprüche, **dadurch gekennzeichnet, dass** mindestens eines der Armierungselemente (40, 42) mit dem Blechpaket (28) des Rotors (22) verschraubt, verschweißt oder vernietet ist.

7. Asynchronmaschine nach einem der vorhergehenden Ansprüche, **dadurch gekennzeichnet, dass** eines der Armierungselemente (40) mit Spiel auf die Rotorwelle (24) aufgeschoben ist und sich gegen eine Ringschulter (46) der Rotorwelle (24) abstützt.

8. Asynchronmaschine nach einem der vorhergehenden Ansprüche, **dadurch gekennzeichnet, dass** eines der Armierungselemente (42) auf die Rotorwelle (24) aufgeschrumpft oder aufgepresst ist.

9. Asynchronmaschine nach einem der vorhergehenden Ansprüche, **dadurch gekennzeichnet, dass** die Armierungselemente (40, 42) radial nach innen über eine innere Umfangsfläche (38) des Kurzschlussrings (36) überstehen.

10. Asynchronmaschine nach einem der vorhergehenden Ansprüche, **dadurch gekennzeichnet, dass** mindestens eines (40) der Armierungselemente (40, 42) eine durch zwei ebene Stirnflächen begrenzte zylindrische Scheibe mit einer Durchtrittsöffnung für die Rotorwelle (24) ist.

11. Asynchronmaschine nach einem der vorhergehenden Ansprüche, **dadurch gekennzeichnet, dass** die Armierungselemente (40, 42) aus magnetischem Stahl bestehen.

12. Asynchronmaschine nach einem der vorhergehenden Ansprüche, **dadurch gekennzeichnet, dass** mindestens eines der Armierungselemente (40, 42) zum Auswuchten des Rotors (22) durch selektiven Materialabtrag bearbeitet ist.

13. Asynchronmaschine nach Anspruch 12, **dadurch gekennzeichnet, dass** das Armierungselement (40, 42) an einer vom benachbarten Kurzschlussring (36) abgewandten Stirnseite durch Materialabtrag bearbeitet ist.
